# EUROPÄISCHE PATENTSCHRIFT

(11) **EP 2 769 178 B1**
(45) Veröffentlichungstag und Bekanntmachung des Hinweises auf die Patenterteilung: **29.06.2016**
(21) Anmeldenummer: 13702400.6
(22) Anmeldetag: 24.01.2013
(51) Int. Cl.: G01B 21/04

(54) **VERFAHREN UND VORRICHTUNG ZUR SICHERSTELLUNG EINER PRÜFABDECKUNG BEI EINER MANUELLEN INSPEKTION**
METHOD AND APPARATUS FOR ENSURING THE EXAMINATION COVER BY MANUAL INSPECTION
MÉTHODE ET DISPOSITIF POUR GARANTIR LA COUVERTURE DE TEST LORS D'UNE INSPECTION MANUELLE

(30) Priorität: 15.02.2012 DE 102012202279
(43) Veröffentlichungstag der Anmeldung: 27.08.2014
(73) Patentinhaber: Siemens Aktiengesellschaft, 80333 München (DE)
(72) Erfinder: BIENKOWSKI, Lukasz, Adam, 81739 München (DE); HOMMA, Christian, 85551 Kirchheim b. München (DE); MOOSHOFER, Hubert, 80538 München (DE); ROTHENFUSSER, Max, 81377 München (DE)
(86) Internationale Anmeldenummer: PCT/EP2013/051289
(87) Internationale Veröffentlichungsnummer: WO 2013/120676

(56) Entgegenhaltungen:
- WO-A1-2011/138741
- DE-A1-102006 058 705
- FR-A1- 2 921 492
- US-A1- 2007 100 579

## Beschreibung

Die Erfindung betrifft ein Verfahren zur manuellen zerstörungsfreien Inspektion eines Prüfobjektes sowie eine Vorrichtung zur Unterstützung einer manuellen zerstörungsfreien Inspektion eines Prüfobjektes.

Bei einer zerstörungsfreien Prüfung eines Prüfobjektes wird in vielen Fällen manuell geprüft, insbesondere dann, wenn bei einem vielfältigen Spektrum verschiedener Prüfobjekte eine Automatisierung nicht lohnt. Unabhängig von der Art der eingesetzten Prüftechnik ist eine sogenannte Prüfabdeckung entscheidend für eine zuverlässige Prüfaussage.

Eine Prüfabdeckung ist gegeben, wenn ein vollständig zu prüfender Bereich eines Prüfobjektes tatsächlich vollständig geprüft wurde.

Bei einer manuellen Ultraschallprüfung wird beispielsweise eine Bauteiloberfläche von einer Prüfperson mit einem Prüfkopf abgerastert. Zur vollständigen Abdeckung einer Prüffläche müssen sich die Prüfkopfbahnen ohne Lücken über die komplette Fläche erstrecken. Abstände zwischen den Prüfkopfbahnen und Prüfkopfgeschwindigkeiten dürfen nicht zu groß werden. Im Fall einer manuellen Wirbelstromprüfung gilt Vergleichbares.

Bei einer aktiven Thermografie wird beispielsweise ein Induktor von einer Prüfperson an bestimmten Stellen und in einem bestimmten Abstand zum Prüfobjekt positioniert. Zur vollständigen Prüfabdeckung müssen alle vorgegebenen Messungen durchgeführt werden, wobei Position des Induktors und Abstand zum Bauteil eingehalten werden müssen.

Es ist Aufgabe der Prüfperson, die geforderte Prüfabdeckung sicherzustellen und hierfür zu unterschreiben. Nachteiligerweise lässt sich herkömmlicherweise nicht mehr kontrollieren, ob alle geforderten Bereiche der Prüfobjekte wie vorgeschrieben geprüft, das heißt abgedeckt, wurden.

Die Sicherstellung der Prüfabdeckung bei einer manuellen Prüfung ist Aufgabe der Prüfperson. Eine Kontrolle der geprüften Fläche oder der korrekten Position ist herkömmlicherweise im Nachhinein nicht mehr möglich.

Herkömmlicherweise werden zur Unterstützung der Prüfperson teilweise Führungsvorrichtungen als Hilfsmittel eingesetzt. Nachteilig ist hier jedoch, dass Führungsvorrichtungen sehr prüfobjektspezifisch sind, sodass sich daraus bei einem vielfältigen Spektrum verschiedener Prüfobjekte zur Bereitstellung derartiger Führungsvorrichtungen ein großer Aufwand ergibt. Des Weiteren kann eine geforderte korrekte Platzierung einer Führungsvorrichtung auf einem Prüfobjekt eine Fehlerquelle darstellen. Eine derartige korrekte Platzierung von Führungsvorrichtungen bewirkt ebenso einen erhöhten Aufwand bei einer Durchführung der Prüfung.

Alternativ wird herkömmlicher Weise zumindest teilweise eine Prüfdurchführung mittels Verwendung von Positionsencodern unterstützt. Auf diese Weise kann eine Einhaltung einer maximalen Prüfgeschwindigkeit kontrolliert werden. Nachteiligerweise können sich Fehler im Hinblick auf Referenzpositionen beziehungsweise Bewegungsrichtungen von Prüfköpfen ergeben, sodass letztlich wiederum die Prüfperson für eine Sicherstellung einer geforderten Prüfabdeckung verantwortlich ist.

Die US 2011/0123097 A1 offenbart ein Verfahren zur Verbesserung des Wirkungsgrades einer dimensionalen Erfassung eines Objekts mittels einer dimensionalen Messvorrichtung, die über dem Objekt ausgerichtet ist, wobei folgende Schritte ausgeführt werden. 1. Ein Führen der Messvorrichtung über dem Objekt. 2. Eine Bereitstellung einer Anzeige der Auflösung der erfassten Bereiche. 3. Erneutes Führen der Messvorrichtung über zumindest einen Teil der erfassten Bereiche mit als ungenügend angezeigter Auflösung. 4. Aktualisierung der Anzeige der Auflösung der erfassten Bereiche.

Die US 2005/0088529 A1 offenbart ein Verfahren zur Erfassung eines 3D-Oberflächenprofildatensatzes eines Objektes mit den Schritten eines Beleuchtens einer Oberfläche des Objektes mit einer Abfolge von mehrfachen Regenbogenlichtmustern, eines Erfassens von Licht, das von dem Objekt reflektiert wurde und eines Berechnens der 3D-Daten.

Die WO 2011/063266 A2 offenbart eine Vergrößerungsvorrichtung für ein Abbildungssystem mit einer Bilderzeugungskomponente, einer Projektionseinrichtung, wobei die Projektionseinrichtung ein Bild oder Muster auf einem Bereich von Interesse während der Bilderzeugung durch das Abbildungssystems projiziert.

Die US 2004/0059217 A1 offenbart ein Navigationssystem für ein chirurgisches Instrument mit einer Ultraschallmaschine und einem Computer, der an die Ultraschallmaschine gekoppelt ist. Ein Speicher ist an den Computer gekoppelt. Der Computer erzeugt ein Icon, das das chirurgische Instrument mit einer Spitze und dem Bewegungspfad des chirurgischen Instruments darstellt.

Die US 2002/0062077 A1 offenbart eine Vorrichtung zur Aufzeichnung von dreidimensionalen Ultraschallbildern. Die Vorrichtung umfasst einen Ultraschallkopf und ein Positionserfassungssystem mit mindestens zwei Sensoren.

Die US 7 912 258 B2 offenbart ein Verfahren und eine Vorrichtung zur Standardisierung eines Ultraschalltrainings unter Verwendung eines Bildes zur physikalischen Raumeintragung von Tomographievolumen des verfolgten Ultraschalls.

Die FR 2 921 492 A1 offenbart ein Verfahren zur manuellen zerstörungsfreien Inspektion eines Prüfobjektes mittels eines Prüfwerkzeugs.

Die WO 2011/138741 A1 offenbart eine zerstörungsfreie Inspektion eines Prüfobjektes, wobei die Position des Prüfwerkzeuges mittels eines photogrammetrischen Systems ermittelt wird.

Die US 2007/100579 A1 offenbart ein tragbares zerstörungsfreies Prüfwerkzeug mit integriertem Kodierer zur Ermittlung der Translationsbewegung des Prüfwerkzeuges.

Die DE 10 2006 058705 A1 offenbart ein tragbares zerstörungsfreies Prüfwerkzeug mit Augendisplay zur Darstellung der für die Prüfung relevanten Daten aufweist.

Es ist Aufgabe der Erfindung ein Verfahren und eine Vorrichtung zur manuellen zerstörungsfreien Inspektion eines Prüfobjektes derart bereitzustellen, dass alle zu prüfenden Bereiche eines Prüfobjektes vollständig, zuverlässig und nachvollziehbar inspiziert werden.

Die Aufgabe wird mittels eines Verfahrens gemäß dem Hauptanspruch und einer Vorrichtung gemäß dem Nebenanspruch gelöst.

Gemäß einem ersten Aspekt wird ein Verfahren zur manuellen zerstörungsfreien Inspektion eines Prüfobjektes mit den folgenden Schritten bereitgestellt: mittels einer Erfassungseinrichtung ausgeführtes Erfassen von dreidimensionalen Oberflächenkoordinaten eines zu prüfenden Bereichs des Prüfobjektes; mittels der Erfassungseinrichtung ausgeführtes kontinuierliches Bestimmen von Positionen und Geschwindigkeiten eines Prüfwerkzeuges relativ zum Prüfobjekt; mittels einer Speichereinrichtung ausgeführtes Speichern von diskreten Positionswerten und Geschwindigkeitswerten des Prüfwerkzeuges zu jeweiligen Messzeitpunkten; mittels einer Rechnereinrichtung ausgeführtes Bestimmen, inwieweit ein mittels einer Summe aller zu bisherigen Messzeitpunkten eingenommenen Positionen des Prüfwerkzeuges festgelegter Bereich, einen vollständig zu prüfenden Bereich des Prüfobjektes abdeckt.

Abdecken kann derart verstanden werden, dass beispielsweise eine vom Prüfwerkzeug abgefahrene Fläche deckungsgleich zu einer zu prüfenden Fläche eines Prüfobjektes ist.

Gemäß einem zweiten Aspekt wird eine Vorrichtung zur Unterstützung einer manuellen zerstörungsfreien Inspektion eines Prüfobjektes mit folgenden Einrichtungen beansprucht: eine Erfassungseinrichtung zum Erfassen von dreidimensionalen Oberflächenkoordinaten eines zu prüfenden Bereichs des Prüfobjektes und zum kontinuierlichen Bestimmen von Positionen und Geschwindigkeiten eines Prüfwerkzeuges relativ zum Prüfobjekt; eine Speichereinrichtung zum Speichern von diskreten Positionswerten und Ähnlichkeitswerten des Prüfwerkzeuges zu jeweiligen Messzeitpunkten; eine Rechnereinrichtung zum Bestimmen, inwieweit ein mittels einer Summe aller zu bisherigen Messzeitpunkten eingenommenen Positionen des Prüfwerkzeuges festgelegter Bereich, einen vollständig zu prüfenden Bereich des Prüfobjektes abdeckt.

Gemäß der vorliegenden Erfindung kann eine Vollständigkeit einer manuellen zerstörungsfreien Prüfung sichergestellt werden. Ebenso ist eine Prüfabdeckung dokumentierbar und nachvollziehbar. Eine Prüfperson kann bei einer Prüfdurchführung wirksam entlastet werden. Erfindungsgemäße Verfahren und Vorrichtungen sind vielseitig für verschiedene Prüfverfahren verwendbar.

Weitere vorteilhafte Ausgestaltungen sind in Verbindung mit den Unteransprüchen beansprucht.

Gemäß einer vorteilhaften Ausgestaltung kann die Erfassungseinrichtung die dreidimensionalen Oberflächenkoordinaten des Prüfobjektes mittels einer Tiefensensorkamera erfassen. Eine Tiefensensorkamera kann dabei ein Verfahren mittels Streifenlichtprojektion, dreidimensionaler Farbtriangulation oder mittels Laserschnitt ausführen. Tiefensensorkameras werden beispielsweise unter einem Markennamen "Microsoft Kinect" angeboten.

Gemäß einer weiteren vorteilhaften Ausgestaltung kann die Rechnereinrichtung für die manuelle Inspektion relevante Informationen bestimmen und diese mittels einer Projektionseinheit auf eine Oberfläche des Prüfobjektes projizieren. Beispielsweise kann eine Darstellung der Prüfabdeckung mittels eines Projektors oder Beamers auf der Prüfobjektoberfläche ausgeführt werden. Beispielsweise kann eine bereits erfasste Fläche beziehungsweise eine noch zu erfassende Fläche ausgegeben werden. Ebenso kann eine nächste Prüfposition beziehungsweise ein Muster von Prüfpositionen, und zwar bei einer punktuellen Prüfung einzelner Messstellen, angezeigt werden. Des Weiteren ist es möglich eine Angabe zu projizieren, ob eine Geschwindigkeit, mit der ein Prüfkopf über das Prüfobjekt gezogen wird, richtig oder zu schnell oder zu langsam ist.

Gemäß einer weiteren vorteilhaften Ausgestaltung können die Informationen eine bereits erfasste Oberfläche und/oder eine noch zu erfassende Fläche, nächste Prüfpositionen oder Angaben zu Geschwindigkeitswerten des Prüfwerkzeuges sein.

Gemäß einer weiteren vorteilhaften Ausgestaltung kann die Erfassungseinrichtung das Prüfwerkzeug mittels Erfassen dessen Form erkennen. Das heißt es kann zusätzlich ein Prüfwerkzeug automatisch identifiziert werden.

Gemäß einer weiteren vorteilhaften Ausgestaltung kann ein Erkennen des Prüfwerkzeuges mittels einer Bibliothek möglicher Formen des Prüfwerkzeuges ausgeführt werden.

Es kann eine Bibliothek möglicher Formen von Prüfwerkzeugen verwendet werden.

Gemäß einer weiteren vorteilhaften Ausgestaltung kann die Erfassungseinrichtung die Art des Prüfwerkzeuges anhand einer auf diesem angeordneten Codes identifizieren.

Gemäß einer weiteren vorteilhaften Ausgestaltung kann die Erfassungseinrichtung das Prüfwerkzeug bei einer gleichzeitigen Orientierung der Erfassungseinrichtung in Wirkrichtung zum Prüfobjekt die Art des Prüfwerkzeuges erkennen. Beispielweise kann durch ein derartiges Einlesen der Form mit einer Tiefensensorkamera die Form eines Prüfwerkzeuges bestimmt werden. Ebenso ist es möglich mittels der Erfassungseinrichtung die Art des Prüfwerkzeuges anhand einer auf dem Werkzeug aufgebrachten Codierung zu erkennen, sobald die Erfassungseinrichtung auf das an das Prüfobjekt angelegte Prüfwerkzeug gerichtet ist.

Gemäß einer weiteren vorteilhaften Ausgestaltung kann die Erfassungseinrichtung Positionen und dazugehörige Ausrichtungen des Prüfwerkzeuges relativ zum Prüfobjekt mittels einer auf dem Prüfwerkzeug angeordneten Marke kontinuierlich bestimmen. Mittels einer 3D-Kamera kann also die Lage und Ausrichtung des Prüfwerkzeuges anhand einer auf dem Prüfwerkzeug aufgebrachten Marke erkannt werden.

Gemäß einer weiteren vorteilhaften Ausgestaltung kann die Speichereinrichtung zusätzlich diskrete Positionswerte und dazugehörige Ausrichtungswerte des Prüfwerkzeuges zu den jeweiligen Messzeitpunkten speichern. Das heißt es können zusätzlich zur Lageinformation Daten hinsichtlich der Orientierung des Prüfwerkzeuges zu den Messzeitpunkten gespeichert werden.

Gemäß einer weiteren vorteilhaften Ausgestaltung kann die Rechnereinrichtung die mittels der Erfassungseinrichtung erfassten Daten mit den von dem Prüfwerkzeug ermittelten Daten an den jeweiligen Messpositionen vergleichen und damit eine Plausibilitätskontrolle der Inspektion durchführen. Beispielsweise kann eine Anschleifbedingung bei einer Ultraschallprüfung kontrolliert werden. Eine Tiefensensorkamera kann zusätzlich zur Inspektion feststellen, dass eine Krümmung einer zu prüfenden Oberfläche innerhalb eines Toleranzbereichs liegt.

Gemäß einer weiteren vorteilhaften Ausgestaltung kann festgelegt werden, wie die Prüfperson das Prüfwerkzeug relativ zum Prüfobjekt bewegt. Es kann beispielsweise vorgegeben werden, dass eine oder mehrere Bedingungen an die Prüfabdeckung durch die Prüfperson erfüllt werden.

Gemäß einer weiteren vorteilhaften Ausgestaltung kann festgelegt werden, dass das Prüfwerkzeug relativ zum Prüfobjekt entlang von Prüfspuren bewegt wird, die ebenso zueinander einen bestimmten vorgegebenen Abstand aufweisen sollen.

Gemäß einer weiteren vorteilhaften Ausgestaltung kann die Rechnereinrichtung mittels eines CAD-Modells zu prüfende Bereiche des Prüfobjektes festlegen.

Gemäß einer weiteren vorteilhaften Ausgestaltung kann das Prüfwerkzeug ein Ultraschall-Prüfkopf, ein Wirbelstrom-Prüfkopf oder ein Induktor sein.

Gemäß einer weiteren vorteilhaften Ausgestaltung kann eine Prüfperson das Prüfwerkzeug kontinuierlich entlang der Oberfläche des Prüfobjektes oder diskret in Messpositionen direkt bewegen.

Gemäß einer weiteren vorteilhaften Ausgestaltung kann mittels einer Triggereinrichtung mittels Triggersignalen ein jeweiliger Messzeitpunkt festgelegt werden.

Die Erfindung wird anhand von Ausführungsbeispielen in Verbindung mit den Figuren näher beschrieben. Es zeigen:
- Figur 1: ein Ausführungsbeispiel eines erfindungsgemäßen Verfahrens;
- Figur 2: ein Ausführungsbeispiel einer erfindungsgemäßen Vorrichtung.

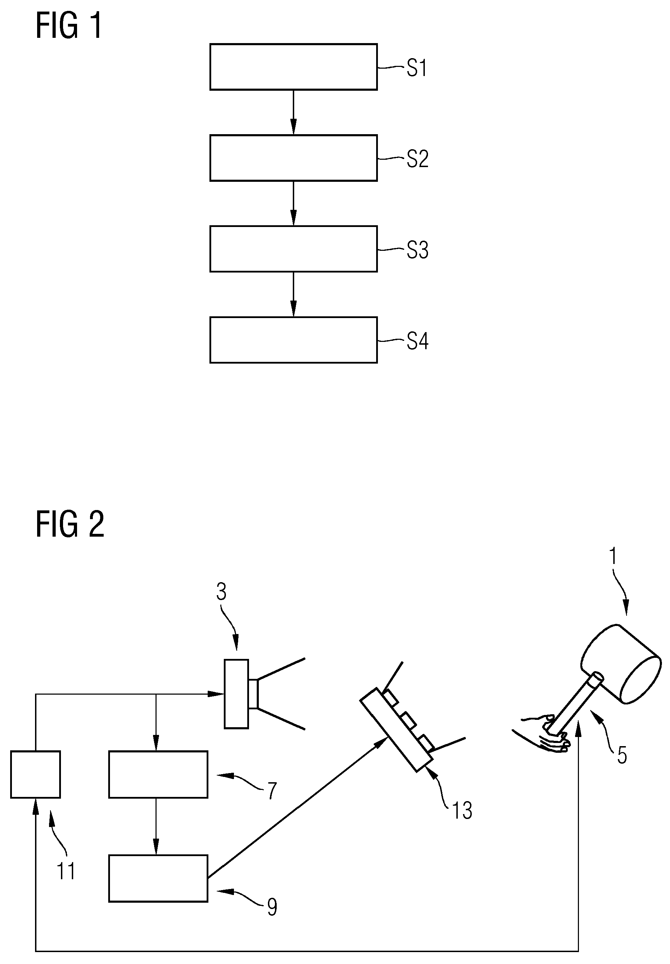

Figur 1 zeigt ein Ausführungsbeispiel eines erfindungsgemäßen Verfahrens. Mit einem ersten Schritt S1 erfasst eine Erfassungseinrichtung dreidimensionale Oberflächenkoordinaten eines zu prüfenden Bereichs eines Prüfobjektes. Mit einem zweiten Schritt S2 führt die Erfassungseinrichtung kontinuierlich ein Bestimmen von Positionen und Geschwindigkeiten eines Prüfwerkzeuges relativ zum Prüfobjekt aus. Gemäß einem dritten Schritt S3 speichert eine Speichereinrichtung diskrete Positionswerte und dazugehörige Geschwindigkeitswerte des Prüfwerkzeuges zu jeweiligen Messzeitpunkten. In einem vierten Schritt S4 bestimmt die Rechnereinrichtung, inwieweit eine bereits erfasste Scanfläche eine zu scannende Gesamtfläche abdeckt.

Figur 2 zeigt ein Ausführungsbeispiel einer erfindungsgemäßen Vorrichtung. Eine erfindungsgemäße Vorrichtung unterstützt eine manuelle zerstörungsfreie Inspektion eines Prüfobjektes 1. Eine manuelle Inspektion wird durch eine Prüfperson ausgeführt. Diese wird durch eine Erfassungseinrichtung 3 zum Erfassen von dreidimensionalen Oberflächenkoordinaten eines zu prüfenden Bereichs des Prüfobjektes 1 und zum kontinuierlichen Bestimmen von Positionen und Geschwindigkeiten eines Prüfwerkzeuges 5 relativ zum Prüfobjekt 1 unterstützt. Die Erfassungseinrichtung 3 kann eine Tiefensensorkamera sein, die dreidimensionale Oberflächenkoordinaten des Prüfobjektes 1 beispielsweise mittels Streifenlichtprojektion erfasst. Andere Verfahren sind ebenso möglich. Eine Speichereinrichtung 7 speichert diskrete Positionswerte und Geschwindigkeitswerte des Prüfwerkzeuges 5 zu jeweiligen Messzeitpunkten. Das Prüfwerkzeug 5 wird beispielsweise in einem bestimmten Abstand entlang der Oberfläche des Prüfobjektes 1 mit der Hand der Prüfperson geführt. Die Messzeitpunkte können beispielsweise mittels einer Triggereinrichtung 11 festgelegt werden. Die Triggereinrichtung 11 erzeugt dazu Triggersignale. Eine Speichereinrichtung 7 speichert alle diskreten Positionswerte und Geschwindigkeitswerte des Prüfwerkzeuges zu jeweiligen Messzeitpunkten. Zu den jeweiligen Messzeitpunkten wird das Prüfwerkzeug 5, das beispielsweise ein Ultraschall-Prüfkopf sein kann, zur Inspektion einer Prüfstelle aktiviert. Eine Rechnereinrichtung 9 bestimmt einen Grad, inwieweit ein mittels einer Summe aller bisherigen Messzeitpunkten eingenommenen Positionen des Prüfwerkzeuges 5 bestimmter Bereich, einen vollständig zu prüfenden Bereich des Prüfobjektes 1 abdeckt. Das heißt, die Rechnereinrichtung 9 bestimmt, wie groß ein Anteil einer bereits erfassten Scanfläche zu einer gesamten Scanfläche ist. Ist das Prüfobjekt 1 vollständig geprüft beziehungsweise inspiziert worden, so ist eine Prüfabdeckung gegeben beziehungsweise die Prüfabdeckung weist einen Wert von 100 % auf. Mittels einer Projektionseinheit 13 können von der Rechnereinrichtung 9 berechnete Informationen auf die Oberfläche des Prüfobjektes in Kenntnis der dreidimensionalen Oberflächenkoordinaten des Prüfobjektes 1 auf die Oberfläche des Prüfobjektes 1 projiziert werden. Dies erleichtert der Prüfperson wirksam das Inspizieren.

Besonders vorteilhaft wird eine Tiefensensorkamera als Erfassungseinrichtung 3 verwendet, die den zu prüfenden Bereich des Prüfobjektes 1 erfasst. Beispielsweise kann das Prüfwerkzeug 5 in den Tiefendaten der 3D-Kamera, also der Erfassungseinrichtung 3, anhand der Form des Prüfwerkzeuges 5 bestimmt werden. Das Prüfwerkzeug 5 kann beispielsweise ein Ultraschall-Prüfkopf, eine Wirbelstrom-Sonde, ein Induktor oder ein Heiß-/Kaltluftgebläse sein. Die Erfassungseinrichtung 3 ermöglicht eine fortlaufende Bestimmung der 3D-Lage und Geschwindigkeit des Prüfwerkzeuges 5. Ebenso ermöglicht die Speichereinrichtung 7 die Speicherung der Lage und Geschwindigkeit des Prüfwerkzeuges 5 zu den jeweiligen Messzeitpunkten. Derartige Messzeitpunkte sind beispielsweise Impuls-Sendezeitpunkte im Fall von Ultraschall beziehungsweise Anregungszeitpunkte im Fall einer aktiven Thermografie. Eine erfindungsgemäße Vorrichtung ermöglicht eine Bestimmung einer Prüfabdeckung anhand der gespeicherten Lage des Prüfwerkzeuges 5 zu den jeweiligen Messzeitpunkten. Mittels der Projektionseinheit 13 kann eine bereits erfasste und/oder noch ausstehende abzutastende beziehungsweise zu inspizierende Fläche abgebildet werden.

Die Vorrichtung basiert auf einem Prüfsystem für die Durchführung einer manuellen Prüfung, insbesondere mittels Ultraschall, Wirbelstrom oder aktiver Thermografie. Dabei kommt ein Prüfwerkzeug 5 zum Einsatz, das von einer Prüfperson über das Prüfobjekt 1 bewegt wird, beziehungsweise an verschiedenen Stellen positioniert wird. Eine Erfassung einer Prüfkopfposition kann mittels Positionstracking mittels einer Tiefensensorkamera als Erfassungseinrichtung 3 ausgeführt werden. Optional kann zur Projektion der Prüfabdeckung ein Beamer als Projektionseinheit 13 verwendet werden. Ein Beamer kann insbesondere ein digitaler Projektor sein. Als Tiefensensorkamera lassen sich herkömmliche Techniken verwenden, beispielsweise 3D-Farbtriangulation, beziehungsweise Produkte wie beispielsweise "Microsoft Kinect". Beispiele für typische Prüfwerkzeuge 5 sind Ultraschall-Prüfköpfe, Wirbelstrom-Prüfköpfe und Induktoren. Messzeitpunkte werden bevorzugt mittels eines Triggersignals von einem Ultraschall-Prüfgerät beziehungsweise von einem Gerät zur Anregung der thermografischen Prüfung mitgeteilt.

Zur Unterstützung einer Prüfperson bei einem Verfahren zur manuellen zerstörungsfreien Inspektion eines Prüfobjektes 1 wird eine Erfassungseinrichtung 3 zur Erfassung von dreidimensionalen Oberflächenkoordinaten eines zu prüfenden Bereichs des Prüfobjektes 1 und zum kontinuierlichen Bestimmen von Positionen und Geschwindigkeiten eines Prüfwerkzeuges 5 relativ zum Prüfobjekt 1 bereitgestellt, wobei mittels einer Speichereinrichtung 7 diskrete Positionswerte und Geschwindigkeitswerte des Prüfwerkzeuges 5 zu jeweiligen Messzeitpunkten gespeichert werden. Eine Rechnereinrichtung 9 bestimmt den Anteil eines bereits inspizierten Bereiches im Verhältnis zu dem gesamten zu prüfenden Bereich des Prüfobjektes 1. Die Idee eignet sich insbesondere für eine manuelle Inspektion von Prüfobjekten 1 mit einer Vielzahl von verschiedenen Formgebungen. Die Prüfperson wird wirksam entlastet und der Vorgang der manuellen zerstörungsfreien Inspektion wird zur Gewährleistung einer vollständigen Prüfung dokumentiert.

## Patentansprüche

1. Verfahren zur manuellen zerstörungsfreien Inspektion eines Prüfobjektes (1), mit den Schritten:
- mittels einer Erfassungseinrichtung (3) ausgeführtes Erfassen von dreidimensionalen Oberflächenkoordinaten eines zu prüfenden Bereichs des Prüfobjektes (1);
- mittels der Erfassungseinrichtung (3) ausgeführtes kontinuierliches Bestimmen von Positionen und Geschwindigkeiten eines Prüfwerkzeuges (5) relativ zum Prüfobjekt (1);
- mittels einer Speichereinrichtung (7) ausgeführtes Speichern von diskreten Positionswerten und Geschwindigkeitswerten des Prüfwerkzeuges (5) zu jeweiligen Messzeitpunkten;
- mittels einer Rechnereinrichtung (9) ausgeführtes Bestimmen, inwieweit ein mittels einer Summe aller zu bisherigen Messzeitpunkten eingenommenen Positionen des Prüfwerkzeuges (5) festgelegter Bereich, einen vollständig zu prüfenden Bereich des Prüfobjektes (1) abdeckt,
- mittels der Erfassungseinrichtung (3) ausgeführtes Erkennen des Prüfwerkzeuges (5) mittels Erfassen einer Form des Prüfwerkzeuges (5), wobei mittels einer Bibliothek möglicher Formen des Prüfwerkzeuges (5) das Erkennen des Prüfwerkzeuges (5) ausgeführt wird.

2. Verfahren nach Anspruch 1, **dadurch gekennzeichnet, dass** die Erfassungseinrichtung (3) die dreidimensionalen Oberflächenkoordinaten des Prüfobjektes (1) mittels einer Tiefensensorkamera, insbesondere mittels Streifenlichtprojektion, dreidimensionaler Farbtriangulation oder Laserschnitt, erfasst.

3. Verfahren nach Anspruch 1, **gekennzeichnet durch** mittels der Rechnereinrichtung (9) ausgeführtes Bestimmen von für die manuelle Inspektion relevanten Informationen und
mittels einer Projektionseinheit (13) ausgeführtes Projizieren der Informationen auf die Oberfläche des Prüfobjektes (1).

4. Verfahren nach Anspruch 3, **dadurch gekennzeichnet, dass** die Informationen eine bereits erfasste Oberfläche und/oder eine noch zu erfassende Fläche, nächste Prüfpositionen oder Angaben zu Geschwindigkeitswerten des Prüfwerkzeuges (5) sind.

5. Verfahren nach Anspruch 1, **gekennzeichnet durch** mittels der Erfassungseinrichtung (3) ausgeführtes Erkennen des Prüfwerkzeuges (5) mittels Erfassen einer auf dem Prüfwerkzeug (5) angeordneten Codierung.

6. Verfahren nach Anspruch 1, **gekennzeichnet durch** mittels der Erfassungseinrichtung (3) ausgeführtes Erkennen des Prüfwerkzeuges (5) bei gleichzeitiger Orientierung der Erfassungseinrichtung in Wirkrichtung zum prüfenden Bereich des Prüfobjektes (1).

7. Verfahren nach Anspruch 1, **gekennzeichnet durch** mittels der Erfassungseinrichtung (3) ausgeführtes kontinuierliches Bestimmen von Positionen und dazugehörigen Ausrichtungen des Prüfwerkzeuges (5) relativ zum Prüfobjekt (1) mittels einer auf dem Prüfwerkzeug (5) angeordneten Marke.

8. Verfahren nach Anspruch 7, **gekennzeichnet durch** mittels der Speichereinrichtung (7) ausgeführtes Speichern von diskreten Positionswerten und dazugehörigen Ausrichtungswerten des Prüfwerkzeuges (5) zu jeweiligen Messzeitpunkten.

9. Verfahren nach Anspruch 1, **gekennzeichnet durch** mittels der Rechnereinrichtung (9) ausgeführtes Vergleichen der mittels der Erfassungseinrichtung (3) erfassten Daten, mit von dem Prüfwerkzeug (5) ermittelten Daten.

10. Verfahren nach Anspruch 1, **gekennzeichnet durch** Festlegen, wie die Prüfperson das Prüfwerkzeug (5) in die Positionen zu den Messzeitpunkten bewegt.

11. Verfahren nach Anspruch 1, **gekennzeichnet durch** Festlegen, dass die Prüfperson das Prüfwerkzeug (5) in die Positionen zu den Messzeitpunkten mit einem bestimmten Abstand von Prüfspuren bewegt.

12. Verfahren nach Anspruch 1, **gekennzeichnet durch** mittels der Rechnereinrichtung (9) ausgeführtes Festlegen zu prüfender Bereiche des Prüfobjektes (1) mittels eines computerunterstützten Design-Models.

13. Verfahren nach Anspruch 1, **dadurch gekennzeichnet, dass** das Prüfwerkzeug (5) ein Ultraschall-Prüfkopf, ein Wirbelstrom-Prüfkopf oder ein Induktor ist.

14. Verfahren nach Anspruch 1, **dadurch gekennzeichnet, dass** eine Prüfperson das Prüfwerkzeug (5) kontinuierlich entlang der Oberfläche des Prüfobjekts (1) oder diskret in Messpositionen bewegt.

15. Verfahren nach Anspruch 1, **dadurch gekennzeichnet, dass** mittels einer Triggereinrichtung (11) Messzeitpunkte mittels Triggersignalen festgelegt werden.

16. Vorrichtung zur Unterstützung einer manuellen zerstörungsfreien Inspektion eines Prüfobjektes (1), mit:
- einer Erfassungseinrichtung (3) zum Erfassen von dreidimensionalen Oberflächenkoordinaten eines zu prüfenden Bereichs des Prüfobjektes (1) und zum kontinuierlichen Bestimmen von Positionen und Geschwindigkeiten eines Prüfwerkzeuges (5) relativ zum Prüfobjekt (1);
- eine Speichereinrichtung (7) zum Speichern von diskreten Positionswerten und Geschwindigkeitswerten des Prüfwerkzeuges (5) zu jeweiligen Messzeitpunkten;
- eine Rechnereinrichtung (9) zum Bestimmen, inwieweit ein mittels einer Summe aller zu bisherigen Messzeitpunkten eingenommenen Positionen des Prüfwerkzeuges (5) festgelegter Bereich, einen vollständig zu prüfenden Bereich des Prüfobjektes (1) abdeckt,
- wobei die Erfassungseinrichtung (3) zum Erkennen des Prüfwerkzeuges (5) mittels Erfassen einer Form des Prüfwerkzeuges (5) und einer Bibliothek möglicher Formen des Prüfwerkzeuges (5) geeignet ist.

17. Vorrichtung nach Anspruch 16, **dadurch gekennzeichnet, dass** die Erfassungseinrichtung (3) eine Tiefensensorkamera ist, die dreidimensionale Oberflächenkoordinaten des Prüfobjektes (1), insbesondere mittels Streifenlichtprojektion, dreidimensionaler Farbtriangulation oder Laserschnitt, erfasst.

18. Vorrichtung nach Anspruch 16, **gekennzeichnet durch** die Rechnereinrichtung (9) zum Bestimmen von für die manuelle Inspektion relevanten Informationen und eine Projektionseinheit (13) zum Projizieren der Informationen auf die Oberfläche des Prüfobjektes (1).

19. Vorrichtung nach Anspruch 18, **dadurch gekennzeichnet, dass** die Informationen eine bereits erfasste Oberfläche und/oder eine noch zu erfassende Fläche, nächste Prüfpositionen oder Angaben zu Geschwindigkeitswerten des Prüfwerkzeuges (5) sind.

20. Vorrichtung nach Anspruch 16, **gekennzeichnet durch** der Erfassungseinrichtung (3) zum Erkennen des Prüfwerkzeuges (5) mittels Erfassen einer auf dem Prüfwerkzeug (5) angeordneten Codierung.

21. Vorrichtung nach Anspruch 16, **gekennzeichnet durch** die Erfassungseinrichtung (3) zum Erkennen des Prüfwerkzeuges (5) bei gleichzeitiger Orientierung der Erfassungseinrichtung in Wirkrichtung zum prüfenden Bereich des Prüfobjektes (1).

22. Vorrichtung nach Anspruch 16, **gekennzeichnet durch** die Erfassungseinrichtung (3) zum kontinuierlichen Bestimmen von Positionen und dazugehörigen Ausrichtungen des Prüfwerkzeuges (5) relativ zum Prüfobjekt (1) mittels einer auf dem Prüfwerkzeug (5) angeordneten Marke.

23. Vorrichtung nach Anspruch 22, **gekennzeichnet durch** die Speichereinrichtung (7) zum Speichern von diskreten Positionswerten und dazugehörigen Ausrichtungswerten des Prüfwerkzeuges (5) zu jeweiligen Messzeitpunkten.

24. Vorrichtung nach Anspruch 16, **gekennzeichnet durch** die Rechnereinrichtung (9) zum Vergleichen der mittels der Erfassungseinrichtung (3) erfassten Daten, mit von dem Prüfwerkzeug (5) ermittelten Daten.

25. Vorrichtung nach Anspruch 16, **gekennzeichnet durch** die Rechnereinrichtung (9) zum Festlegen zu prüfender Bereiche des Prüfobjektes (1) mittels eines computerunterstützten Design-Models.

26. Vorrichtung nach Anspruch 16, **dadurch gekennzeichnet, dass** das Prüfwerkzeug (5) ein Ultraschall-Prüfkopf, ein Wirbelstrom-Prüfkopf oder ein Induktor ist.

27. Vorrichtung nach Anspruch 16, **dadurch gekennzeichnet, dass** eine Triggereinrichtung (11) Messzeitpunkte mittels eines Triggersignals festgelegt.

## Claims

1. Method for the manual nondestructive inspection of a test object (1), having the steps of:
- using a detecting device (3) to detect three-dimensional surface coordinates of a region of the test object (1) which is to be tested;
- using the detecting device (3) to continuously determine positions and speeds of a test tool (5) relative to the test object (1);
- using a storage device (7) to store discrete position values and speed values of the test tool (5) at respective measurement instants; and
- using a computer device (9) to determine how far a region defined by means of a sum of all the positions of the test tool (5) assumed at previous measurement instants covers a region of the test object (1) to be tested completely;
- using the detecting device (3) to identify the test tool (5) by detecting a shape of the test tool (5), the test tool (5) being identified using a library of possible shapes of the test tool (5).

2. Method according to Claim 1, **characterized in that** the detecting device (3) detects the three-dimensional surface coordinates of the test object (1) by means of a depth sensor camera, in particular by means of strip light projection, three-dimensional color triangulation or laser cutting.

3. Method according to Claim 1, **characterized by** using the computer device (9) to determine information relevant to the manual inspection, and using a projection unit (13) to project the information onto the surface of the test object (1).

4. Method according to Claim 3, **characterized in that** the information comprises an already detected surface and/or an area still to be detected, next test positions or data relating to speed values of the test tool (5).

5. Method according to Claim 1, **characterized by** using the detecting device (3) to identify the test tool (5) by detecting a code arranged on the test tool (5).

6. Method according to Claim 1, **characterized by** using the detecting device (3) to identify the test tool (5) while simultaneously orienting the detecting device in the effective direction relative to the region of the test object (1) being tested.

7. Method according to Claim 1, **characterized by** using the detecting device (3) to continuously determine positions and associated alignments of the test tool (5) relative to the test object (1) by means of a mark arranged on the test tool (5).

8. Method according to Claim 7, **characterized by** using the storage device (7) to store discrete position values and associated alignment values of the test tool (5) at respective measurement instants.

9. Method according to Claim 1, **characterized by** using the computer device (9) to compare the data acquired by means of the detecting device (3) with data determined by the test tool (5).

10. Method according to Claim 1, **characterized by** ascertaining how the test person moves the test tool (5) into the positions at the measurement instants.

11. Method according to Claim 1, **characterized by** ascertaining that the test person moves the test tool (5) into the positions at the measurement instants with a specific spacing of test tracks.

12. Method according to Claim 1, **characterized by** using the computer device (9) to define regions of the test object (1) to be tested by means of a computer-aided design model.

13. Method according to Claim 1, **characterized in that** the test tool (5) is an ultrasonic test head, an eddy-current test head or an inductor.

14. Method according to Claim 1, **characterized in that** a test person moves the test tool (5) continuously along the surface of the test object (1) or discretely into measurement positions.

15. Method according to Claim 1, **characterized in that** a trigger device (11) is used to fix measurement instants by means of trigger signals.

16. Device for supporting a manual nondestructive inspection of a test object (1), having:
- a detecting device (3) for detecting three-dimensional surface coordinates of a region of the test object (1) to be tested, and for continuously determining positions and speeds of a test tool (5) relative to the test object (1) ;
- a storage device (7) for storing discrete position values and speed values of the test tool (5) at respective measurement instants;
- a computer device (9) for determining how far a region defined by means of a sum of all the positions of the test tool (5) assumed at previous measurement instants covers a region of the test object (1) to be tested completely;
- the detecting device (3) being suitable for identifying the test tool (5) by detecting a shape of the test tool (5) and a library of possible shapes of the test tool (5).

17. Device according to Claim 16, **characterized in that** the detecting device (3) is a depth sensor camera which detects three-dimensional surface coordinates of the test object (1), in particular by means of strip light projection, three-dimensional color triangulation or laser cutting.

18. Device according to Claim 16, **characterized by** the computer device (9) for determining information relevant to the manual inspection, and a projection unit (13) for projecting the information onto the surface of the test object (1).

19. Device according to Claim 18, **characterized in that** the information comprises an already detected surface and/or an area still to be detected, next test positions or data relating to speed values of the test tool (5).

20. Device according to Claim 16, **characterized by** the detecting device (3) for identifying the test tool (5) by detecting a code arranged on the test tool (5).

21. Device according to Claim 16, **characterized by** the detecting device (3) for identifying the test tool (5) while simultaneously orienting the detecting device in the effective direction relative to the region of the test object (1) being tested.

22. Device according to Claim 16, **characterized by** the detecting device (3) for continuously determining positions and associated alignments of the test tool (5) relative to the test object (1) by means of a mark arranged on the test tool (5).

23. Device according to Claim 22, **characterized by** the storage device (7) for storing discrete position values and associated alignment values of the test tool (5) at respective measurement instants.

24. Device according to Claim 16, **characterized by** the computer device (9) for comparing the data acquired by means of the detecting device (3) with data determined by the test tool (5).

25. Device according to Claim 16, **characterized by** the computer device (9) for defining regions of the test object (1) to be tested by means of a computer-aided design model.

26. Device according to Claim 16, **characterized in that** the test tool (5) is an ultrasonic test head, an eddy-current test head or an inductor.

27. Device according to Claim 16, **characterized in that** a trigger device (11) fixes measurement instants by means of a trigger signal.

## Revendications

1. Procédé d'inspection non destructive manuelle d'un objet de test (1), comprenant les étapes :
- de détecter des coordonnées de surface tridimensionnelles d'une zone à inspecter de l'objet de test (1), au moyen d'un dispositif de détection (3) ;
- de déterminer en continue des positions et des vitesses d'un outil de test (5) par rapport à l'objet de test (1), au moyen du dispositif de détection (3) ;
- de mémoriser des valeurs de position et des valeurs de vitesse discrètes de l'outil de test (5) à des moments de mesure respectifs, au moyen d'un dispositif de mémoire (7) ;
- de déterminer, au moyen d'un dispositif informatique (9), dans quelle mesure une zone définie par la somme de toutes les positions prises par l'outil de test (5) à des moments de mesure antérieurs couvre une zone à inspecter intégralement de l'objet de test (1) ;
- de détecter l'outil de test (5) au moyen du dispositif de détection (3) en détectant une forme de l'outil de test (5), la détection de l'outil de test (5) s'effectuant à l'aide d'une bibliothèque de formes possibles de l'outil de test (5).

2. Procédé selon la revendication 1, **caractérisé en ce que** le dispositif de détection (3) détecte les coordonnées de surface tridimensionnelles de l'objet de test (1) au moyen d'une caméra à capteur de profondeur, en particulier par projection de lumière en bande, triangulation de couleur tridimensionnelle ou découpe au laser.

3. Procédé selon la revendication 1, **caractérisé par** la détermination d'informations pertinentes pour l'inspection manuelle au moyen du dispositif informatique (9) et la projection des informations sur la surface de l'objet de test (1) au moyen d'une unité de projection (13).

4. Procédé selon la revendication 3, **caractérisé en ce que** les informations sont une surface déjà détectée et/ou une surface qui reste à détecter, des positions de contrôle suivantes ou des indications sur les valeurs de vitesse de l'outil de test (5).

5. Procédé selon la revendication 1, **caractérisé par** l'identification de l'outil de test (5) au moyen du dispositif de détection (3), en détectant un codage placé sur l'outil de test (5).

6. Procédé selon la revendication 1, **caractérisé par** l'identification de l'outil de test (5) au moyen du dispositif de détection (3), tout en orientant le dispositif de détection dans la direction d'action vers la zone à inspecter de l'objet de test (1).

7. Procédé selon la revendication 1, **caractérisé par** la détermination continue de positions et d'orientations associées de l'outil de test (5) par rapport à l'objet de test (1) au moyen du dispositif de détection (3), à l'aide d'une marque placée sur l'outil de test (5).

8. Procédé selon la revendication 7, **caractérisé par** la mémorisation de valeurs de position discrètes et de valeurs d'orientation associées de l'outil de test (5) à des moments de mesure respectifs, au moyen du dispositif de mémoire (7).

9. Procédé selon la revendication 1, **caractérisé par** la comparaison des données détectées par le dispositif de détection (3) avec des données relevées par l'outil de test (5), au moyen du dispositif de mémoire (7).

10. Procédé selon la revendication 1, **caractérisé par** le fait de déterminer la manière dont la personne chargée de l'inspection déplace l'outil de test (5) vers les positions aux moments de la mesure.

11. Procédé selon la revendication 1, **caractérisé par** le fait de déterminer que la personne chargée de l'inspection déplace l'outil de test (5) vers les positions aux moments de la mesure à une certaine distance de pistes de contrôle.

12. Procédé selon la revendication 1, **caractérisé par** la détermination, au moyen du dispositif informatique (9), de zones à inspecter de l'objet de test (1) à l'aide d'un modèle de conception assistée par ordinateur.

13. Procédé selon la revendication 1, **caractérisé en ce que** l'outil de test (5) est un palpeur à ultrasons, un palpeur à courants de Foucault ou un inducteur.

14. Procédé selon la revendication 1, **caractérisé en ce qu'**une personne chargée de l'inspection déplace l'outil de test de façon continue le long de la surface de l'objet de test (1) ou de façon discrète vers des positions de mesure.

15. Procédé selon la revendication 1, **caractérisé en ce que** des moments de mesure sont fixés au moyen d'un dispositif de déclenchement (11) à l'aide de signaux de déclenchement.

16. Dispositif d'aide à l'inspection non destructive manuelle d'un objet de test (1), comprenant :
- un dispositif de détection (3) pour détecter des coordonnées de surface tridimensionnelles d'une zone à inspecter de l'objet de test (1) et pour déterminer en continu des positions et des vitesses d'un outil de test (5) par rapport à l'objet de test (1) ;
- un dispositif de mémoire (7) pour mémoriser des valeurs de position et des valeurs de vitesse discrètes de l'outil de test (5) à des moments de mesure respectifs ;
- un dispositif informatique (9) pour déterminer dans quelle mesure une zone définie par la somme de toutes les positions prises par l'outil de test (5) à des moments de mesure antérieurs couvre une zone à inspecter intégralement de l'objet de test (1),
- le dispositif de détection (3) étant apte à identifier l'outil de test (5) en détectant une forme de l'outil de test (5) et une bibliothèque de formes possibles de l'outil de test (5).

17. Dispositif selon la revendication 16, **caractérisé en ce que** le dispositif de détection (3) est une caméra à capteur de profondeur qui détecte des coordonnées de surface tridimensionnelles de l'objet de test (1), en particulier par projection de lumière en bande, triangulation de couleur tridimensionnelle ou découpe au laser.

18. Dispositif selon la revendication 16, **caractérisé par** le dispositif informatique (9) pour déterminer des informations pertinentes pour l'inspection manuelle et par une unité de projection (13) pour projeter les informations sur la surface de l'objet de test (1).

19. Procédé selon la revendication 18, **caractérisé en ce que** les informations sont une surface déjà détectée et/ou une surface qui reste à détecter, des positions de contrôle suivantes ou des indications sur des valeurs de vitesse de l'outil de test (5).

20. Dispositif selon la revendication 16, **caractérisé par** le dispositif de détection (3) pour identifier l'outil de test (5) en détectant un codage placé sur l'outil de test (5).

21. Dispositif selon la revendication 16, **caractérisé par** le dispositif de détection (3) pour identifier l'outil de test (5) tout en orientant le dispositif de détection dans la direction d'action vers la zone à inspecter de l'objet de test (1).

22. Dispositif selon la revendication 16, **caractérisé par** le dispositif de détection (3) pour déterminer de façon continue des positions et des orientations associées de l'outil de test (5) par rapport à l'objet de test (1) à l'aide d'une marque placée sur l'outil de test (5).

23. Dispositif selon la revendication 22, **caractérisé par** le dispositif de mémoire (7) pour mémoriser des valeurs de position discrètes et des valeurs d'orientation associées de l'outil de test (5) à des moments de mesure respectifs.

24. Dispositif selon la revendication 16, **caractérisé par** le dispositif informatique (9) pour comparer les données détectées par le dispositif de détection (3) avec des données relevées par l'outil de test (5).

25. Dispositif selon la revendication 16, **caractérisé par** le dispositif informatique (9) pour déterminer des zones à inspecter de l'objet de test (1) à l'aide d'un modèle de conception assistée par ordinateur.

26. Dispositif selon la revendication 16, **caractérisé en ce que** l'outil de test (5) est un palpeur à ultrasons, un palpeur à courants de Foucault ou un inducteur.

27. Dispositif selon la revendication 16, **caractérisé en ce qu'**un dispositif de déclenchement (11) fixe des moments de mesure par un signal de déclenchement.
